# EUROPEAN PATENT SPECIFICATION

(11) **EP 1 869 965 B1**
(45) Date of publication and mention of the grant of the patent: **25.11.2009**
(21) Application number: 07011580.3
(22) Date of filing: 13.06.2007
(51) Int. Cl.: A01D 34/90

(54) **A motor-driven grass mover**
Motorengetriebener Rasenmäher
Tondeuse à gazon motorisée

(30) Priority: 22.06.2006 JP 2006172535
(43) Date of publication of application: 26.12.2007
(73) Proprietor: Itoh Denki Co., Ltd., Kasai-shi, Hyogo 675-2302 (JP)
(72) Inventor: Itoh, Junya, Kasai-shi Hyogo 675-2302 (JP)
(74) Representative: Paul, Dieter-Alfred

(56) References cited:
- EP-A- 0 622 008
- EP-A- 1 403 008
- DE-U1- 20 020 013
- GB-A- 2 125 668
- JP-A- 58 047 406
- US-A- 5 181 369
- US-A1- 2001 010 124
- US-A1- 2002 064 421

## Description

### TECHNICAL FIELD

The present invention relates to a power-driven grass mower, and more particularly, to a motor-driven grass mower.

### BACKGROUND ART

Power-driven grass mowers capable of cutting grass with a rotary circular blade or cutter are known in the art. This type of grass mower is commonly equipped with a small engine. However, the engine driven grass mower has a problem of causing noise. Noise in the residential areas is likely to cause a nuisance which is a typical public hazard. In addition, the engine-operated mower vibrates violently, thereby making it difficult for elders, women and children to use it. Even for men, the violent vibration can be a problem when the mower is used for long hours. In recent years, motor-driven grass mowers are employed in place of engine-driven grass mowers.

A motor-driven grass mower requires an electric power source, and the commercially available motor-driven grass mowers use a commercial electric power source, wherein the mower is connected to the power source through an electric plug. The mower must be equipped with an electric wire in order to receive current supply from the power source, and the wires must be long enough to enable the mower to work in areas distant from the power source, and move around here and there in a vast field. However, the problem is that the wires are often cut by the rotary blade of the mower while it moves around.
In order to eliminate the wire-cut troubles occurring while the mower is in operation, a battery has come into use instead of the commercial power source. Examples are disclosed in Japanese Utility Model Laid-open Application No. 1995/36611 (Reference (1)) and Utility Model Registration No. 2,525,820 (Reference (2)).

The grass mower disclosed in Reference (1) is loaded with a motor at its top end, and a battery is a separate unit independent of the main body of the mower. The motor receives a power supply through a power supply cord.

The mower disclosed in Reference (2) is also a motor-driven model, and a motor is equipped at the top end of the main body whereas a battery is at the rear end thereof.

The common feature among the grass mowers disclosed in References (1) and (2) is that each has the motor loaded at its top end, so as to drive the rotary grass cutters directly without using wires. As a result, the common disadvantage is in their heavy head. The heavy head is likely to fatigue the carrier especially when he or she tries to cut the grass on a slope, where the weight of the top portion concentrates on the carrier standing below the mower on the slope. This working conditions tend to limit the range over which the grass is cut.
The document JP 58 047 406 discloses a power-driven grass mower including an operation division, such as a rotary grass cutter, a motor division, a front operating lever and a rear operating lever wherein the operation division is located in the top section of the mower, the motor division is located between the handle and the operation division and the front operating lever is located between the operation division and the motor division. Accordingly, the primary object of the present invention is to equalize the weight throughout the entire body of the mower so as to eliminate an unbalanced application of weight.

### SUMMARY OF THE INVENTION

A first version of grass mower embodying the present invention includes an operation division in which a grass cutter, such as a rotary cutter, and an ancillary, a motor division in which an electric motor is accommodated, a power-source division in which a battery is accommodated, and a front operating lever and a rear operating lever, wherein the operation division is located in the top section of the mower, the motor division is located in the middle of the mower, the front operating lever is located between the operation division and the motor division, the power-source division is located in the rear section of the mower, and the rear operating lever is located between the motor division and the power-source division, the rear operating lever including an electrical conductor for supplying an electric current to the motor, and the front operating lever includes a power transmission unit through which the power of the motor is transmitted to the operation division.

Since the motor division is located in the middle of the main body of the mower, the weight of the motor is well balanced irrespective of the mower taking various positions, thereby reducing the fatigue which would otherwise inflict on the operator when he or she raises the rotary blade unit.

This first version of grass mower need not have the power-transmission unit behind the motor division. Thus, the angle between the rear operating lever and the motor division can be varied without affecting the power transmission.

A second version of grass mower is featured by the expedient whereby the angle between the rear operating lever and the motor division can be varied.

A third version of grass mower is featured by the reliability of the motor division and the front operating lever.

A third version of grass mower has a front operating lever replaceable with another of a different length.

A fourth version of grass mower includes an output shaft within the motor, an input shaft in the rear operating lever, and a coupler unit connecting these two shafts, wherein the coupler unit is engageable and disengageable when the motor division and the front operating lever.

According to this version, the engagement and disengagement between the motor division and the front operating lever cause the same between the power-transmission division and the motor. Thus, it makes it easy to replace the front operating lever.

A fifth version of grass mower is any of the first and fourth versions modified by adding a feature that the battery division can be readily added or replaced.

The fifth version of grass mower makes it easy to add and replace a motor.

A sixth version of grass mower is any of the first and fifth versions modified by adding a voltage detector which monitors the voltage at the power-source division so as to supply an adequate voltage to the motor division.

The sixth version of grass mower is advantageous in that irrespective of the replacement of the power-source division, the motor division can have a constant supply of power.

A seventh version of grass mower is any of the first and sixth versions modified so as to make the power supply intermittent.

An eighth version of grass mower is the seventh version modified by adding a load detector whereby at least one of the interval and unit time of supplying an electric power to the motor is varied in accordance with the applied load.

The eighth version can supply an electric power at an adequate interval or unit time in accordance with the applied load, thereby avoiding wasting electricity.

A ninth version of grass mower is the eight version modified can supply an electric power at an adequate interval or unit time in accordance with the applied load, thereby avoiding wasting electricity.

The ninth version can respond to the load through a rise in the supplied power in accordance with an increase in the working load. Thus, if the blades of the mower are caught by a branch fallen on the ground, and stopped from rotation, the supplying power is stepped down, thereby preventing a probable over-load

A tenth version of grass mower is any of the first to ninth version modified by adding a load monitor, thereby varying the voltage applied to the motor in response to the load applied to the mower.

A eleventh version of grass mower is the tenth version modified by adding an expedient for stepping up voltage applied to the motor in accordance with the load

A twelfth version of grass mower is any of the first to eleventh version modified by making the front operating lever displaceable for a timely attachment in the motor division

In common with the various versions described above the primary advantage of the present invention the entire weight of the main body is well balanced irrespective of varied postures taken during the grass cutting, thereby minimizing or reducing the fatigue of the operator.

### BRIEF DESCRIPTION OF THE DRAWINGS

Fig. 1 is a perspective view showing a first version of grass mower embodying the present invention;
Fig. 2 is a perspective exploded view of the grass mower of Fig. 1;
Fig. 3 is a sectional view of an area from the motor division to the operation division of Fig. 1;
Fig. 4 is a perspective exploded view showing the connection between the motor division and the rear operating lever of Fig. 1;
Fig. 5A is a fragmentary front view showing the motor division and the rear operating lever, and Fig.5B shows the state in which the rear operating lever is bent against the motor division;
Fig. 6A is a diagrammatical front view showing the grass mower, Fig.6B shows the state in which the grass mower is used with the rear lever being bent upward while Fig. 6C shows the state in which the rear lever is bent downward each against the motor division;
Fig. 7 is a sectional view showing the part from the power-source division to the motor division;
Fig. 8 is a perspective view showing the grass mower provided with a power-source division of larger size;
Fig. 9 is a perspective view showing another replaceable type of front lever to be fixed to the grass mower for replacement;
Fig. 10 is a perspective view showing the grass mower fixed with the front lever of Fig. 9;
Fig. 11 is a sketch showing an operator who is using the grass mower of Fig. 10;
Fig. 12 is a perspective view showing a further replaceable type of front lever;
Fig. 13 is a perspective view showing other replaceable type of cutter.
Fig. 14 is a perspective view showing the grass mower equipped with the cutter of Fig. 13; and
Fig. 15 is a perspective view showing another version of grass mower embodying the present invention.

### DESCRIPTION OF THE PREFERED EMBODIMENTS

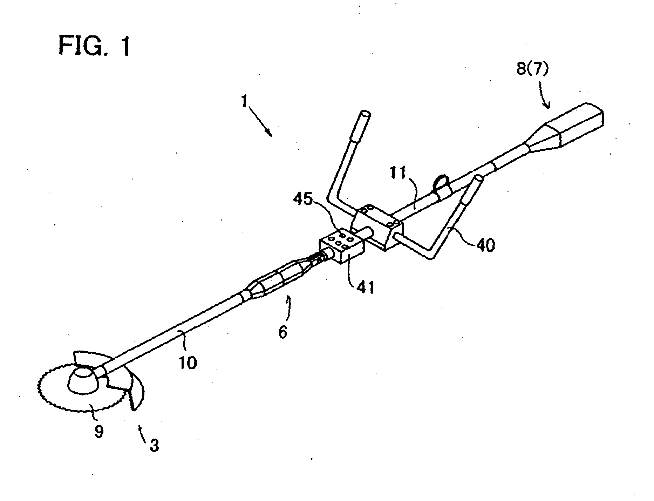

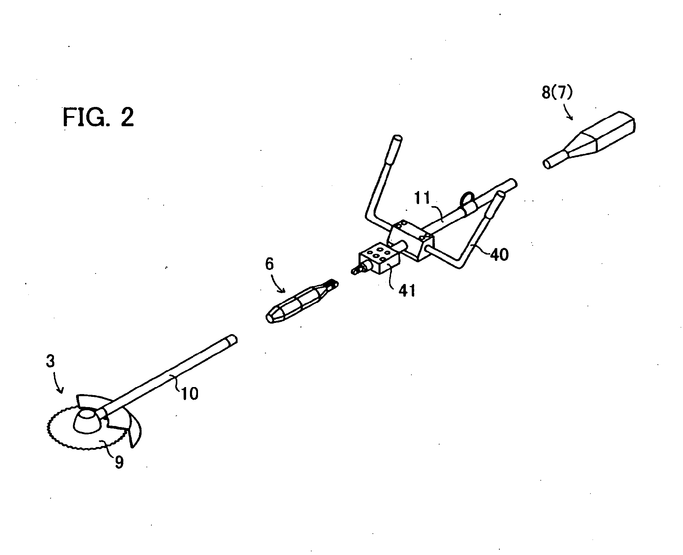

Referring to Figs. 1 to 3, the first version of grass mower embodying the present invention will be described:
The grass mower 1 includes an operation division 3 accommodating a disc-shaped rotary cutter 9, a motor division 6 accommodating a motor and its ancillary, and a power-source division 8 accommodating a battery 7. The operating lever is divided into a front operating lever (hereinafter, "front lever") 10 and a rear operating lever (hereinafter, "rear lever") 11.

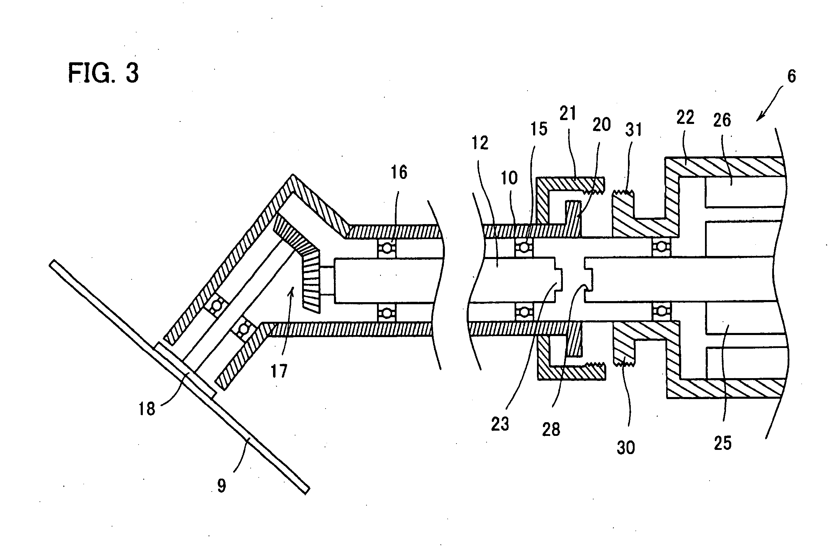

The front lever 10, as shown in Fig. 3, houses a power-transmission shaft 12 rotatively carried through bearings 15, 16 and unreleasably in the thrust direction.

As best shown in Fig. 3, the front lever 10 is connected to the operation division 3 housing a bevel gear 17 whose input side is connected to the power-transmission shaft 12. The bevel gear 17 causes the power-transmission shaft 12 to vary its rotational direction to 45°. The bevel gear 17 is connected to a rotary cutter mount 18 on its output side in a known manner such as screws.

In Fig. 3, the front lever 10 includes a flange 20 and a nut, preferably a hexagonal cap nut, adjacent to the motor division 6. The power-transmission shaft 12 includes a projecting engager 23 toward the motor division 6.

The motor division 6 of this first version is exclusively composed of a motor which includes a shell 22 housing a rotor 25 and a stator 26 fixed directly on the inside wall of the shell 22. The rotor 25 is rotatively arranged in the central space of the shell 22, and is provided with a recessed engager 28 corresponding to the projecting engager 23 of the input side of the power-transmission shaft 12.
The output shaft of the rotor 25 projects through the motor division 6 toward the input shaft of the front lever 12. The shell 22 is provided with a flange 30 having threads 31 on and along its periphery. Herein, the motor 6 is selectively a brushless motor.

In this version the motor division 6 and the front lever 10 are coupled by means of the nut 21 and the threads 31, thereby joining the flanges 20 and 30 together. In this way the motor division 6 and the front lever 10 are integrally connected into a single driving unit.
In this case, the connection between the projecting engager 23 and the recessed engager 28 secures the connection of the rotor 25 and the power-transmission shaft 12 only in a rotational direction, but not in an axial direction, which means that the power-transmission shaft 12 and the rotor 25 can be separated in the axial direction.

As a result, by unfastening the nut 21 out of the threads 31, and separating the rotor 25 from the power-transmission shaft 12, the motor division 6 and the front lever 10 are readily disassembled.
By taking the reverse procedure; that is, by fastening the nut 21 to the threads 31 and connecting the rotor 25 to the power-transmission shaft 12, the assembly is instantly achieved.

As is evident from the description mentioned above, the grass mower can be readily subjected to regular maintenance, such as oiling, replacement of parts and cleaning, as described below.

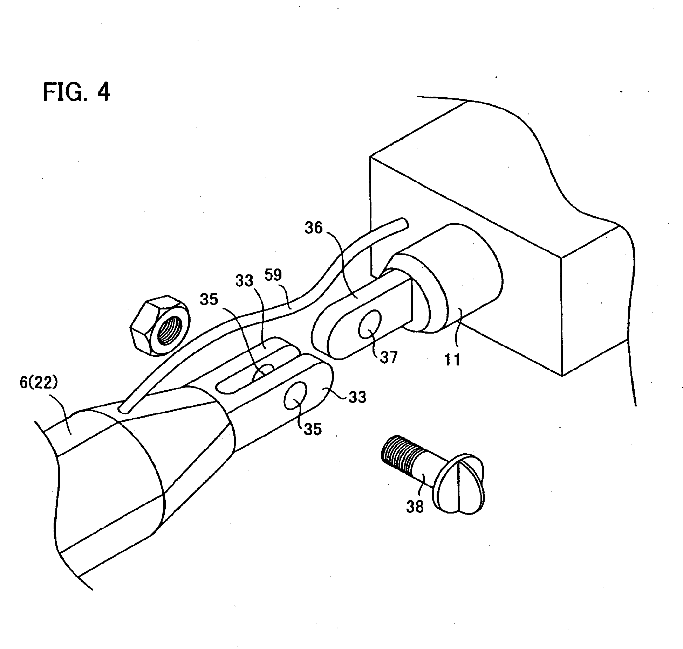

Referring to Fig. 4, which is a perspective exploded view illustrating the relationship of Fig. 1 between the motor division 6 and the rear lever 11, the feature of this section is that the motor division 6 and the rear lever 11 can be adjusted at various angles. The details follow:

The shell 22 is provided with a two-tine engager 33 having a bore 35 passing through the two tines, and the rear lever 11 is provided with a tongue 36 projecting toward the two-tine engager 33, the tongue 36 having a bore 37 passing through the tongue 36. The tongue 36 is inserted into between the tines 33, and a screw 38 is inserted through the bores 35 and 37.
In this version the motor division 6 and the rear lever 11 can be connected as tightly as desired with the screw 38.

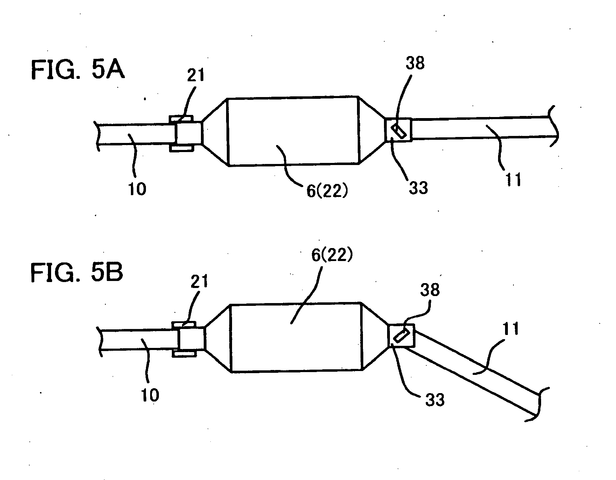

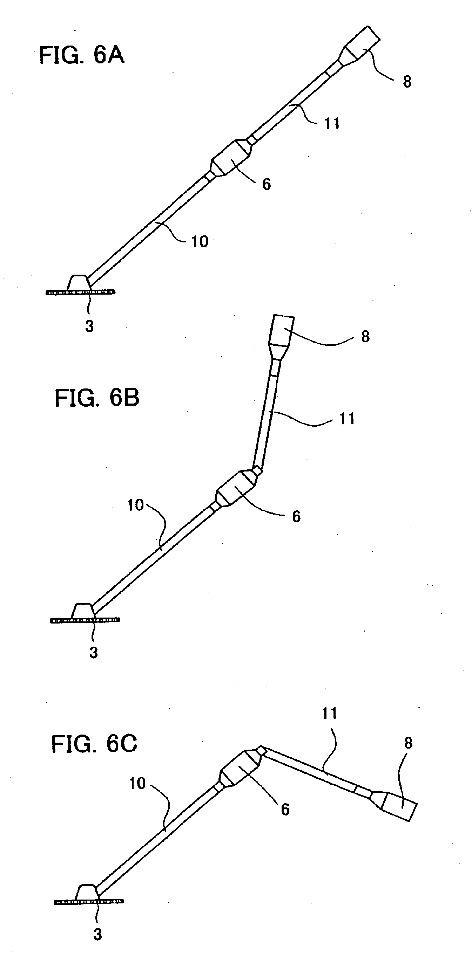

In addition, the rear lever 11 can be connected to the motor division 6 at a desired angle by fastening the screw 38 as illustrated in Fig. 5. Figs. 6A and 6B show examples in which they are coupled each other at various angles.

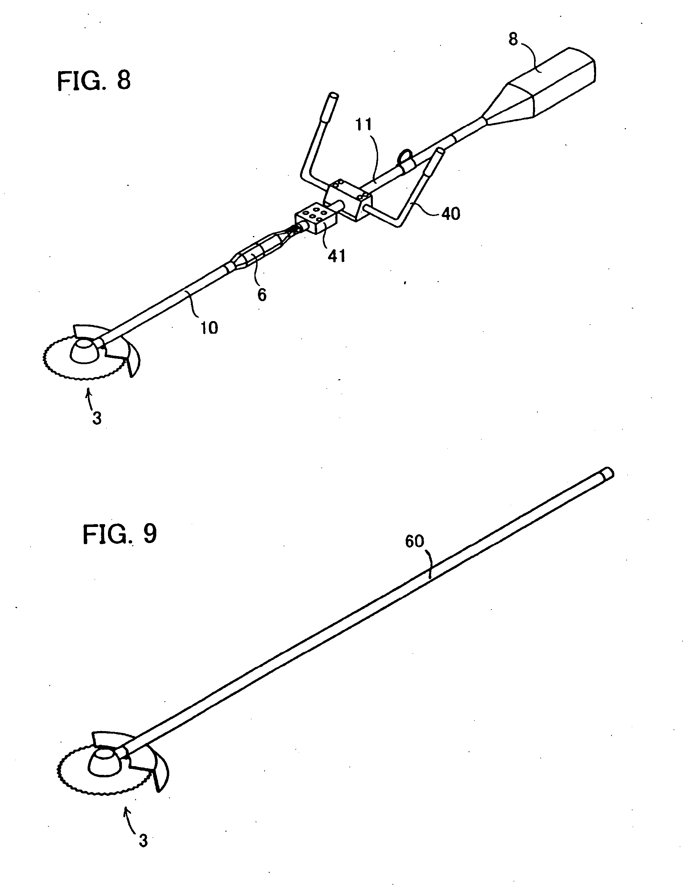

Referring to Fig. 8, the rear lever 11 is provided with an operating handle 40, and a controller 41 in the middle thereof. The controller 41 includes a switch 45 which functions not only as turning on-off but also selecting various operational modes, which will be more particularly described:

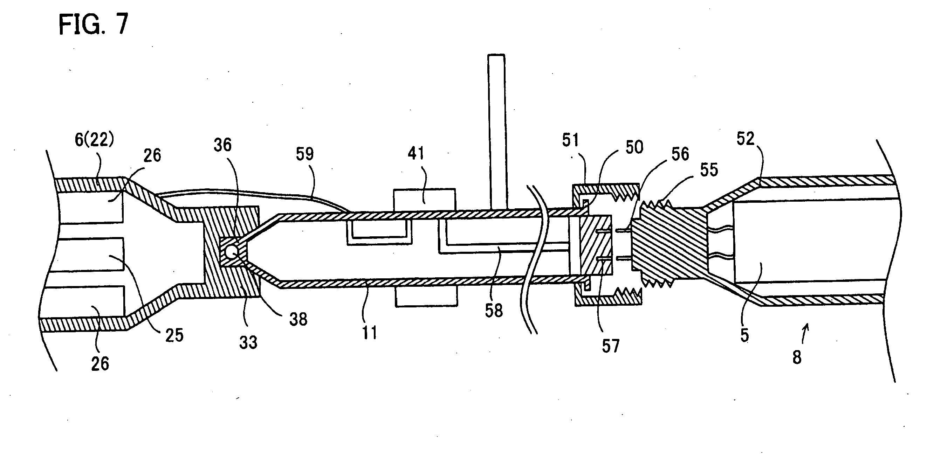

The rear lever 11 is connected to a power-source division 8 which is installed in the same manner as the motor division 6 and the front lever 10 are connected. Referring to Fig. 7, which is a cross-sectional view showing an area covering the power-source division to the motor division 6. The rear lever 11 is provided with a nut 51, preferably a hexagonal cap nut, toward the power-source division.
The power-source division 8 includes a casing 52 having threads 55 on and along its periphery, the threads 55 being adapted to mesh with the nut 51 so as to couple the power-source division 8 with the rear lever 11.

The power-source division 8 is provided with pins 56 on its end face, and the rear lever 11 is provided with a socket 57. When the pins 56 are secured in the socket 57, the power-source division 8 and the rear lever 11 are electrically connected.

This version of grass mower has an advantage that the rear lever 11 can be readily disconnected from the power-source division 8 merely by disengaging the pins 56 from the socket 57.

The rear lever 11 houses an electrical conductor 58 in the form of a cable, which connects the socket 57 to the controller 41. The controller 41 has another cable 59 electrically connected, and the cable 59 is electrically connected to the motor division 6.

According to this version of grass mower, the power-source division 8 can be readily dismounted, and replaced with another power-source of different capacity and voltage where necessary. Owing to this feature, the level of output power can be adjusted to the working conditions, such as those of the cutting grass. Fig. 8 shows an example having a motor division 8 of a larger size.

Preferably, the controller 41 is provided with a voltage detector (not shown) for monitoring variations in the voltage input from the power-source division. The controlling mode is varied in accordance with the voltage monitored by the voltage detector, thereby ensuring the constant supply of adequate power. For example, suppose that the power-source division 8 is a built-in lithium battery having two stages of circuits in series, the power-supply voltage will be about 6 to 9 volts.
If the power-source division 8 is a built-in lithium battery having four stages of circuits in series, the power-supply voltage will be about 12 to 18 volts. If the power-source division 8 is a built-in nickel-hydrogen battery having ten stages of circuits in series, the power-supply voltage will be about 12 volts. If the power-source division 8 is a built-in nickel-hydrogen battery having twenty stages of circuits in series, the power-supply voltage will be about 24 volts. The controller 41 monitors the voltage varying with the capacity of the battery, thereby supplying a power of adequate capacity to the motor division 6. When the battery voltage is high, a higher voltage is applied to the motor division 6, but the voltage is not proportional to the voltage at the power-supply division 8.

The first version of grass mower is operated as follows:
The operation can be conducted in a light-load mode, a heavy-load mode, an energy-saving mode, and a special mode. The light-load mode is suitable for cutting soft grass such as lawn at a relatively low voltage applied to the motor division 6, where the rotary cutter can slowly rotate at a current with a relatively low upper limit.

The heavy-load mode is suitable for cutting grass whose stalks are stiff at a high voltage applied to the motor division 6, where the rotary cutter can speedily rotate at a current with the high upper limit. In this case, the power-source division 8 is replaced with an adequate power-source

The energy-saving mode is a mode in which the current is intermittently supplied to the motor-division 6; more particularly, the current is supplied at a predetermined cycle, or in other words, a pulsating voltage is applied to the motor division 6. In this mode, the motor division 6 rotates at intervals, but the rotary cutter 9 functions as a balance wheel and can rotate at a constant speed under its own momentum. In this mode the load is constantly monitored; more particularly, the current supplied to the motor division 6 is constantly measured. The variations in the load are ascertained indirectly through the measured current values.

When the load increases, the power-supplying time is prolonged per hour; for example, the pulse width is increased without changing the frequency, or alternatively, the pulse intervals are shortened without changing the pulse width, thereby avoiding energy waste. Another advantage is that the rotary cutter can be instantly stopped if it is prevented from rotation by being caught by an unexpected obstacle, thereby keeping the motor safe from being damaged.

This version of grass mower can reduce the current supplying time per unit hour when an overload occurs in the grass mower. For example, the rotary cutter is stopped from rotation by being caught by a tree branch. In this way, the motor can be protected against being burnt out.

The special mode is selected when a cutter other than a rotary cutter and/or an attachment is to be used. The rotations per minute (r.p.m.) is predetermined in accordance with the intended use. For example, when a nylon cord cutter is used, the r.p.m. is set so as to achieve a high speed at which the operation division is performed. In this version of grass mower a clipper can be employed when small grass is cut or trimmed, where it is required to rotate the motor at a slow speed.

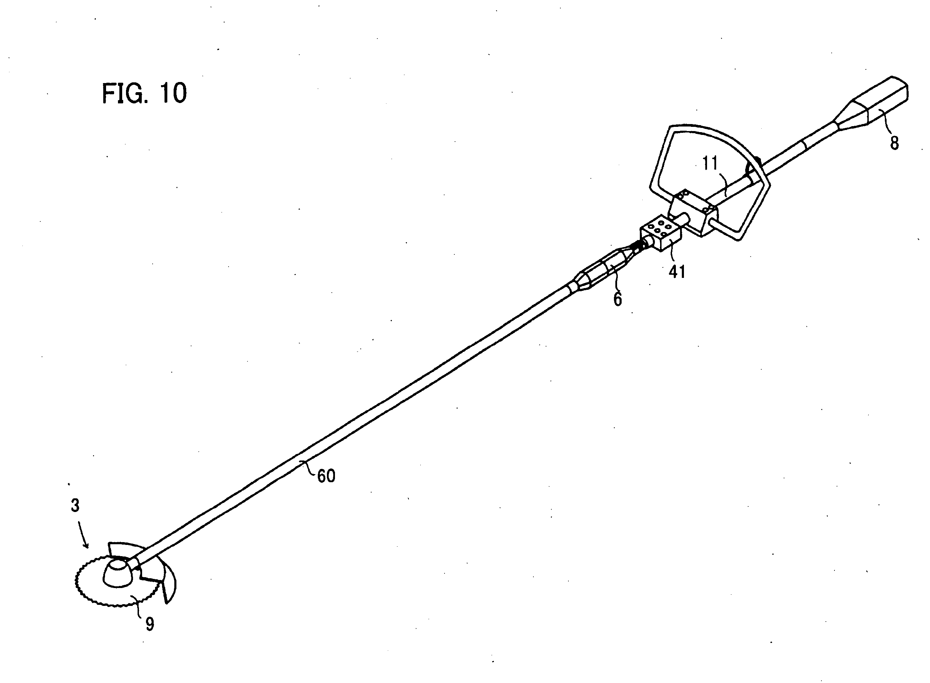

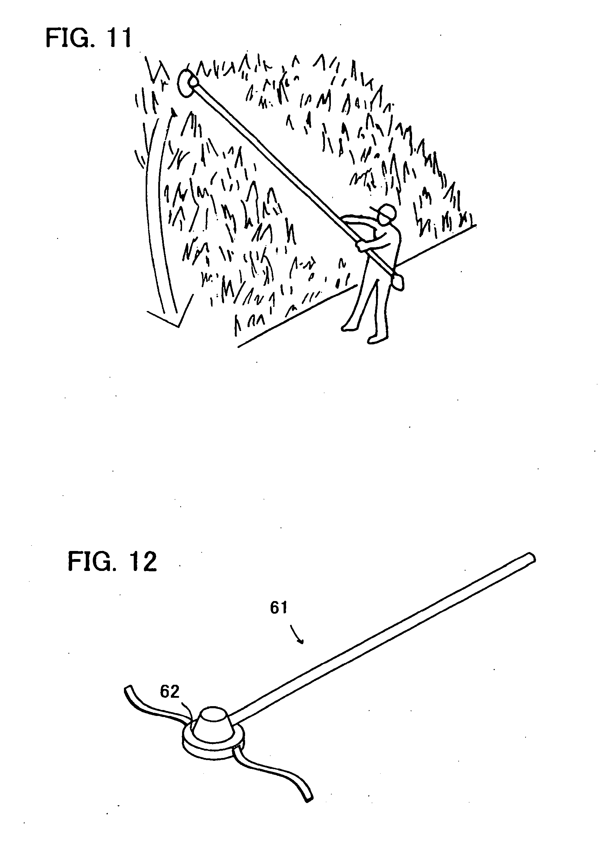

The following description is about how to deal with the front lever when the cutter is replaced with another type:
Referring to Figs. 9 to 12, the front lever 10 can be readily replaced with an adequate type with the working conditions, such as agricultural works and gardening works. One example of a front lever to be replaced is shown in Fig. 9; the illustrated front lever 60 having a relatively long shank. The long front lever 60 is effective to cut grass growing on the slope as shown in Fig. 11.

Fig. 11 shows an operator cutting grass growing on the slope of a bank or a hill-side while standing on the road down the hill. It will be appreciated that the long front lever 60 is helping for the operator to cut grass at a distant. In this case, where the grass on a steep slope is to be cut from below as shown in Fig. 11, the operator must raise the operation division 3 high enough. The operator can bend the rear lever 11 upward as shown in Fig. 6B. When the grass in the lower part of the slope is to be cut, the operator can bend the rear lever downward as shown in Fig. 6C.
In this version the shell 22 of the motor division 6 is joined to the rear lever 11 by means of the screw 38, which constitutes a clevis type structure. The mere handling of the screw 38 can connect and disconnect the shell 22 and the rear lever 11, thereby allowing the relative angle between the motor division 6 and the rear lever 11 to vary readily as desired. Therefore, it is easy to bend the rear lever 11 when necessary. Since the motor division 6, the most heavy part, is positioned in the middle of the entire body, the operator can easily raise the machine up and will be kept safe from fatigue even if the grass cutting lasts long.

The rotary cutter can be replaced with a nylon cord cutter. As shown in Fig. 12, a new front lever 61 having a nylon cord cutter is previously prepared, and when necessary, it replaces the old front lever.

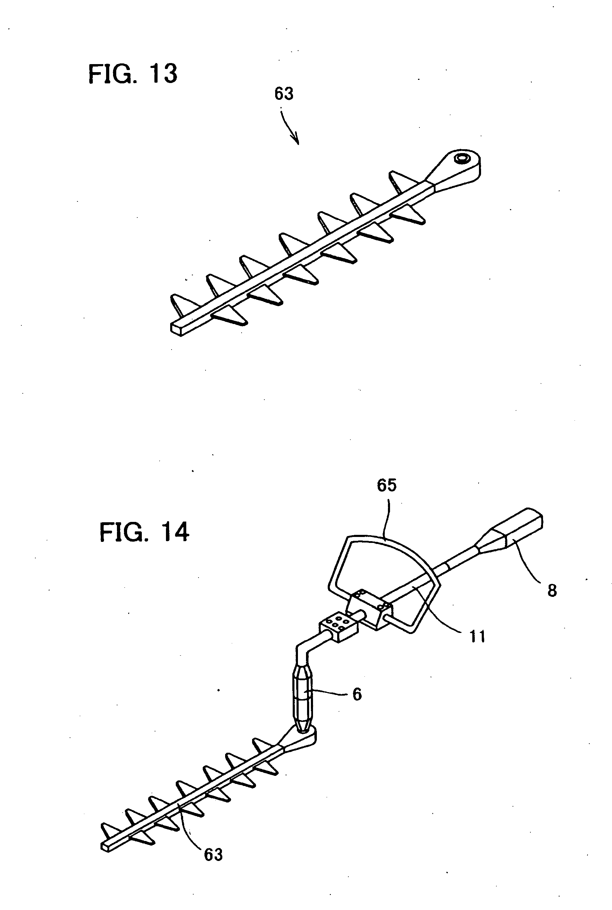

Fig. 13 shows a clipper-type cutter 63 used for clipping grass. The grass mower of the invention allows this type of cutter to be fixed to as shown in Fig. 14. In this case, the motor division 6 and the rear lever 11 can be placed substantially at a right angle to each other.
The clipper-type cutter is generally heavier than the ordinary rotary cutter, but it can be well balanced with the heavy motor division 6 placed in the middle of the entire body. Therefore, no difficulty will be felt during the operation. The example illustrated in Fig. 14 is provided with a ring-shaped handle 65.

In the embodiments described above the power-source division 8 can be readily replaced in accordance with the purposes, for which the capacity and voltage variously vary. Furthermore, if necessary, one or two more motor divisions can be added.

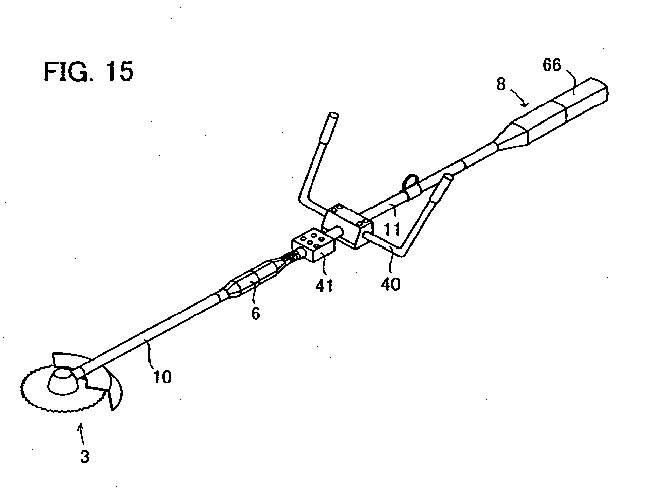

Fig. 15 shows another version of grass mower in which a power-source division 66 is additionally connected in series to the original motor-division 8, so as to step up the total voltage of the grass mower.
In the embodiments described above the rear lever can be bent for the motor-division. It is also possible that the rear lever can be more bent; for example, at its middle portion so as to ensure that the rearmost lever portion is arranged at an angle to the motor division.

## Claims

1. A power-driven grass mower (1) comprising:
an operation division (3) in which a grass cutter, such as a rotary cutter (9) and an ancillary;
a motor division (6) in which an electric motor is accommodated; and
a power-source division (8) comprising a battery (7) a front operating lever (10) comprising an input shaft and a rear operating lever (11);
wherein the operation division (3) is located in the top section of the mower (1) the motor division (6) is located in the middle of the mower (1) the front operating lever (10) is located between the operation division (3) and the motor division (6) the power-source division (8) is located in the rear section of the mower (1) and the rear operating lever (11) is located between the motor division (6) and the power-source division (8); and
wherein the rear operating lever (11) comprises an electrical conductor (58) for supplying an electric current to the motor, and the front operating lever (10) comprises a power transmission unit (12) through which the power of the motor is transmitted to the operation division (3).

2. The grass mower of claim 1, further comprising means (38) for adjusting the angle between the motor division and the rear operating lever (11).

3. The grass mower of claim 2, further comprising a means whereby the front operating lever (10) is detachable from the motor division (6).

4. The grass mower of claim 3, further comprising a means for engaging and disengaging the output shaft of the motor and the input shaft of the front operating lever (10).

5. The grass mower of any one of claims 1 to 4, wherein the power-source division (8) comprises a means for enabling the addition and replacement of a power-source.

6. The grass mower of any one of claims 1 to 5, further comprising a voltage detector for monitoring the voltage applied to the motor division (6) whereby an adequate voltage is constantly applied to the motor division (6).

7. The grass mower of any one of claims 1 to 5, wherein the power is intermittently supplied to the motor division (6).

8. The grass mower of claim 7, further comprising a load detector for controlling the power supply in response to the load being applied to the motor division (6) by changing the intervals or the time of supplying an electric current to the motor.

9. The grass mower of claim 8, further comprising a load detector for monitoring a possible excessive load applied to the motor division (6), so as to prolong the time of supplying an electric current in response to an increase in the load and shorten the time of supplying an electric current in response to a possible excessive load.

10. The grass mower of any one of claims 1 to 9, further comprising a load detector so as to vary the voltage to be applied to the motor division (6) in response to the load at the motor division (6).

11. The grass mower of claim 9, wherein the voltage to be applied to the motor is increased in response to the detected load at the motor.

12. The grass mower of any one of claims 1 to 11, further comprising a means for allowing an attachment to be fixed to the motor division (6) in accordance with the purpose currently intended.

## Patentansprüche

1. Motorgetriebener Rasenmäher (1) mit:
einem Funktionsabschnitt (3), in welchem ein Grasschneider wie beispielsweise ein Rotationsschneider (9) und ein Zusatzgerät vorgesehen sind;
einem Motorabschnitt (6), in welchem ein Elektromotor untergebracht ist; und
einem Energiequellenabschnitt (8), der eine Batterie (7), einen vorderen Betätigungshebel (10) mit einer Antriebswelle und einen hinteren Betätigungshebel (11) aufweist;
wobei der Funktionsabschnitt (3) in dem oberen Teil des Mähers (1) platziert ist, der Motorabschnitt (6) in der Mitte des Mähers (1) platziert ist, der vordere Betätigungshebel (10) zwischen dem Funktionsabschnitt (3) und dem Motorabschnitt (6) platziert ist, der Energiequellenabschnitt (8) in dem hinteren Teil des Mähers (1) platziert ist und der hintere Betätigungshebel (11) zwischen dem Motorabschnitt (6) und dem Energiequellenabschnitt (8) platziert ist; und
der hintere Betätigungshebel (11) einen elektrischen Leiter (58) aufweist, um dem Motor einen elektrischen Strom zuzuführen, und der vordere Betätigungshebel (10) eine Energieübertragungseinheit (12) aufweist, durch welche die Motorenergie an den Funktionsabschnitt (3) übertragen wird.

2. Der Rasenmäher von Anspruch 1, welcher weiterhin Mittel (38) aufweist, um den Winkel zwischen dem Motorabschnitt und dem hinteren Betätigungshebel (11) einzustellen.

3. Der Rasenmäher von Anspruch 2, welcher weiterhin ein Mittel aufweist, durch welches der vordere Betätigungshebel (10) von dem Motorabschnitt (6) lösbar ist.

4. Der Rasenmäher von Anspruch 3, welcher weiterhin ein Mittel aufweist, um die Abtriebswelle des Motors und die Antriebswelle des vorderen Betätigungshebels (10) in und außer Eingriff zu bringen.

5. Der Rasenmäher nach einem der Ansprüche 1 bis 4, worin der Energiequellenabschnitt (8) ein Mittel aufweist, um das Hinzufügen und das Ersetzen einer Energiequelle zu ermöglichen.

6. Der Rasenmäher nach einem der Ansprüche 1 bis 5, welcher weiterhin einen Spannungsdetektor aufweist, um die an dem Motorabschnitt (6) anliegende Spannung zu überwachen, wodurch eine adäquate Spannung konstant an dem Motorabschnitt (6) angelegt wird.

7. Der Rasenmäher nach einem der Ansprüche 1 bis 5, worin die Energie intermittierend dem Motorabschnitt (6) zugeführt wird.

8. Der Rasenmäher nach Anspruch 7, welcher weiterhin einen Ladungsdetektor aufweist, um die Energiezufuhr in Reaktion auf die Last, welche an dem Motorabschnitt (6) anliegt, zu steuern, indem die Zeitintervalle, in denen ein elektrischer Strom dem Motor zugeführt wird, verändert werden.

9. Der Rasenmäher nach Anspruch 8, welcher weiterhin einen Lastdetektor aufweist, um eine mögliche übermäßige Last, welche an dem Motorabschnitt (6) anliegt, zu überwachen und so die Zeit, in der ein elektrischer Strom zugeführt wird, in Reaktion auf einen Lastanstieg zu verlängern und die Zeit, in der ein elektrischer Strom zugeführt wird, in Reaktion auf eine mögliche übermäßige Last zu verkürzen.

10. Der Rasenmäher nach einem der Ansprüche 1 bis 9, welcher weiterhin einen Lastdetektor aufweist, um die Spannung, welche an dem Motorabschnitt (6) angelegt wird, in Reaktion auf die Last an dem Motorabschnitt (6) zu variieren.

11. Der Rasenmäher nach Anspruch 9, worin die an dem Motor anzulegende Spannung in Reaktion auf die erfasste Last an dem Motor erhöht wird.

12. Der Rasenmäher nach einem der Ansprüche 1 bis 11, welcher weiterhin ein Mittel aufweist, um das Anbringen einer Befestigung an dem Motorabschnitt (6) gemäß dem jeweils beabsichtigten Zweck anzubringen.

## Revendications

1. Tondeuse à gazon motorisé (1) comprenant:
- une division de travail (3) dans laquelle un couteau de gazon, comme un couteau rotatif (9) et un auxiliaire sont prévus;
- une division moteur (6) dans laquelle est accommodé un moteur électrique; et
- une division source de puissance (8) comprenant une batterie (7), un levier d'actionnement frontal (10) comprenant un arbre d'entrée et un levier d'actionnement arrière (11),
- où la division de travail (3) est logée dans la section de haut de la tondeuse (1), la division moteur (6) est logé dans le milieu de la tendeuse (1), le levier d'actionnement frontal (10) est logé entre la division de travail (3) et la division moteur (6), la division source de puissance (8) est logée dans la section arrière de la tendeuse (1) et le levier d'actionnement arrière (11) est logé entre la division moteur (6) et la division source de puissance (8); et
- où le levier d'actionnement arrière (11) comprend un conducteur électrique (58) pour alimenter un courant électrique au moteur, et le levier d'actionnement frontal (10) comprend une unité de transmission de puissance (12) par laquelle la puissance du moteur est transmise à la division de travail (3).

2. Tondeuse à gazon selon la revendication 1, comprenant de plus le moyen (38) pour ajuster l'angle entre la division moteur et le levier d'actionnement arrière (11).

3. Tondeuse à gazon selon la revendication 2, comprenant de plus un moyen par lequel le levier d'actionnement frontal (10) est détachable de la division moteur (6).

4. Tondeuse à gazon selon la revendication 3, comprenant de plus un moyen pour l'engagement et le désengagement de l'arbre de sortie du moteur et de l'arbre d'entrée du levier d'actionnement frontal (10).

5. Tondeuse à gazon selon l'une quelconque des revendications 1 à 4, où la division source de puissance (8) comprend un moyen pour permettre l'addition et le remplacement d'une source de puissance.

6. Tondeuse à gazon selon l'une quelconque des revendications 1 à 5, comprenant de plus un détecteur de tension pour surveiller la tension appliquée à la division moteur (6) par lequel une tension adéquate est appliquée de manière constante à la division moteur (6).

7. Tondeuse à gazon selon l'une quelconque des revendications 1 à 5, où la puissance est fournie de manière intermittente à la division moteur (6).

8. Tondeuse à gazon selon la revendication 7, comprenant de plus un détecteur de charge pour contrôler l'alimentation de puissance en réponse à la charge étant appliquée à la division moteur (6) en changeant les intervalles ou le temps d'alimentation d'un courant électrique au moteur.

9. Tondeuse à gazon selon la revendication 8, comprenant de plus un détecteur de charge pour surveiller une charge excessive possible appliquée à la division moteur (6) pour prolonger le temps d'alimentation d'un courant électrique en réponse à une croissance dans la charge et diminuer le temps d'alimentation d'un courant électrique en réponse à une charge excessive possible.

10. Tondeuse à gazon selon l'une quelconque des revendications 1 à 9, comprenant de plus un détecteur de charge pour faire varier la tension qui va être appliquée à la division moteur (6) en réponse à la charge à la division de moteur (6).

11. Tondeuse à gazon selon la revendication 9, où la tension qui va être appliquée au moteur est agrandie en réponse à la charge détectée au moteur.

12. Tondeuse à gazon selon l'une quelconque des revendications 1 à 11, comprenant de plus un moyen pour permettre à un attachement d'être fixé à la division moteur (6) conforme au but couramment proposé.
